Europäisches Patentamt

(19) European Patent Office

Office européen des brevets

(11) Publication number: **0 194 566**
**A1**

## (12) EUROPEAN PATENT APPLICATION

(21) Application number: 86102871.0

(22) Date of filing: 05.03.86

(51) Int. Cl.⁴: **A 01 N 57/12**
**//(A01N57/12, 53:00, 37:38)**

(30) Priority: 08.03.85 US 709617

(43) Date of publication of application:
17.09.86 Bulletin 86/38

(84) Designated Contracting States:
AT BE CH DE FR GB IT LI LU NL SE

(71) Applicant: AMERICAN CYANAMID COMPANY
1937 West Main Street P.O. Box 60
Stamford Connecticut 06904(US)

(72) Inventor: Walgenbach, Paul Joseph
11 Arrowwood Drive
Hamilton New Jersey(US)

(74) Representative: Wächtershäuser, Günter, Dr.
Tal 29
D-8000 München 2(DE)

(54) Insecticidal compositions.

(57) The present invention relates to insecticidal compositions comprising a mixture of a pyrethroid and O, O-diethyl
S-[(ethylthio)methyl] phosphorodithioate or S-[[ (1,1-
dimethylethyl)thio]methyl] 0,0-diethylphosphorodithioate.
The invention also relates to a method of controlling insect
pests and additionally providing protection from cutworms
(Lepidoptera:Noctuidae) of an agronomic crop utilizing
granular compositions of the invention.

## BACKGROUND OF THE INVENTION

Noctuid larvae, named commonly as cutworms, armyworms, loopers, semiloopers, leafworms, borers, and fruitworms represent a serious problem in crops such as corn, cotton, tobacco, rice and many vegetables. Infestation and resulting damage to crops due to these pests vary greatly from year to year depending upon climatic conditions and weather patterns. As such, treatments such as sprays and baits are normally only applied after a dangerous infestation has been identified. Rescue treatments of this type are usually effective. However, in order for this type of treatment to be effective for preventing destruction of seedling stands, an infestation must be discovered early and treated promptly. Black cutworms in particular can be highly destructive to corn, due to their habit of eating the stem of a plant, cutting it down at ground level. Damage from this pest can make it necessary to replant large quantities of corn if not treated promptly and effectively.

One insecticidal composition which is commonly used for the control of pests, such as mites, which attack corn, cotton, and many vegetables is phorate (0,0-diethyl S-[(ethylthio)methyl]phosphorodithioate). This insecticide is normally applied in granular formulations as a band concurrently with the planting operation.

Another insecticidal composition which is used for the control of pests, such as maize billbugs, Southern corn billbugs, cutworms, lesser cornstalk borers, symphylans and nematodes, which attack corn, sugar beets and grain sorghum is terbufos (S-[[1,1-dimethylethyl)-thio)methyl] 0,0-diethylphosphorodithioate). This insecticide is normally applied in granular formulation as a band at planting.

United States Patent 4,199,595 discloses synthetic pyrethroid flucythrinate, (±)-cyano-(3-phenoxyphenyl) methyl (+)-4-(difluoromethoxy)-alpha-(1-methylethyl) benzeneacetate) and its preparation. This insecticide is used for the control of pests, such as cutworms, corn earworms, fall armyworms, European corn borers and aphids.

## SUMMARY OF THE INVENTION

The invention relates to insecticidal compositions comprising a mixture of a pyrethroid with 0,0-diethyl S-[(ethylthio)methyl]phosphorodithioate (phorate), or S-[[(1,1-dimethylethyl)thio]methyl] 0,0-diethylphosphorodithioate (terbufos), and methods of controlling insect pests and/or providing protection from black cutworm infestation and damage.

Typical pyrethroids are (±)-α-cyano-m-phenoxybenzyl (+)-2-[p-(difluoromethoxy) phenyl]-3-methylbutyrate (flucythrinate), cyano-(3- phenoxyphenyl)-methyl-4-chloro-α-(1-methylethyl) benzeneacetate (fenvalerate) and cypermethrin.

In accordance with the invention, a single application of the insecticidal compositions, at planting time provides effective control of a wide variety of pests and additionally affords protection against black cutworm. This avoids the disadvantages of the prior art treatment since there is no need for rescue follow-up. Thus, the present composition avoids the expense connected with rescue treatments. Additionally, it has been found that the present compositions also provide control of Lepidoptera in excess of the expected control attributable to each of the insecticidal components.

### DESCRIPTION OF THE PREFERRED EMBODIMENTS

In accordance with the invention, the compositions provided effective control of a wide variety of insect pests, such as cutworms, corn rootworms, wireworms, white grubs, seedcorn maggots, seedcorn beetles, flea beetles, European corn borers, corn leaf aphids and spider mites. It may be applied as granular compositions containing 1% to 25% by weight of phorate or terbufos and a minimum of 0.1% to 2.5% by weight of pyrethroid on sorptive or non-sorptive particulate granular particles such as diatomites, clays such as kaoline, attapulgite, montmorillonite, limestone, ground corn cobs, sand silica activated carbon and the like.

When non-sorptive carriers are used, the surface of the particles may be wetted with the active materials and then coated with finely ground clay, talc, walnut shell flour, or other inert material. A binder or sticking agent may also be added to assure the adherence of the active material to the particles.

In the case of sorptive carriers such as clays, the clay particles are treated with a polyol deactivator such as an alkylene glycol, diethylene glycol, propylene glycol, triethylene glycol, polyethylene glycol, and the like. About 1% to 20% by weight of the deactivator is used to avoid stability problems.

The results obtained by varying the ratios of the components of the instant compositions are shown in Table I. It can be seen that compositions containing 10/1 to 40/1 weight ratios of phorate or terbufos to flucythrinate are useful. For application under growing conditions normal application rates as a broadcast application for phorate and terbufos are in the 1.0 to 3.0 lb/acre range and preferred compositions of the invention would provide a minimum of from 0.01 to .09 lbs/acre of flucythrinate on a broadcast basis. However, it should be recognized that under varying insect pressure and climatic conditions actual rates of application may vary while maintaining 10/1 to 40/1 weight ratio of the components.

## TABLE I

Topical LD$_{50}$ in ng/worm (Southern Armyworms, Third Instar)

|  | Treatment | LD$_{50}$ (ng/worm) | LD$_{50}$ (ng/worm) |
|---|---|---|---|
| a |  |  |  |
|  | Treatment | LD$_{50}$ (ng/worm) | LD$_{50}$ (ng/worm) |
| a | Phorate | 747.0* | 747.0* |
| b | Flucythrinate | 11.53* | 11.53* |
| a/b | 10/1 | 9.8+ | 95 + 9.5 |
| a/b | 20/1 | 4.8+ | 95 + 4.7 |
| a/b | 30/1 | 7.1+ | 202 + 6.7 |
| a/b | 40/1 | 4.9+ | 189 + 4.7 |
| c | Terbufos | 204.0* | 204.0* |
| b | Flucythrinate | 11.53* | 11.53* |
| c/b | 10/1 | 3.8+ | 37 + 3.7 |
| c/b | 20/1 | 2.9+ | 55 + 2.8 |
| c/b | 30/1 | 4.6+ | 129 + 4.3 |
| c/b | 40/1 | 3.6+ | 136 + 3.4 |

*Average value of all tests.

+IN FLUCYTHRINATE EQUIVALENTS

Flucythrinate equivalents = (Potency Ratio) (Weight of Organo Phosphate) + Weight of Flucythrinate

where potency ratio = $\dfrac{\text{LD}_{50} \text{ flucythrinate}}{\text{LD}_{50} \text{ organophosphate}}$

For convenience, rates of application are expressed on a broadcast basis, which represents the total amounts of material which would be present if the compositions were evenly distributed over a one acre plot. In practice, granular compositions of this type are frequently applied as "banded" treatments over the rows of planted crops and are frequently expressed in terms of ounces per 1,000 feet of row. Thus, this type of application can result in varying expressions of concentration of materials in localized areas depending upon the spacing of the crops. Expression of application rates on a broadcast basis readily enables conversion to other application practices.

In order to demonstrate the present invention, the following examples are given primarily as an illustration. No specific details or enumerations contained therein should be construed as limitations on the present invention except insofas as they appear in the appended claims. All parts and percentages are by weight unless otherwise specifically designated.

## EXAMPLE 1

### Preparation of granular compositions

The general procedures for the preparation of granular pesticidal compositions of the invention.

## Method A

The desired quantity of granules is charged into a suitable pill coater apparatus modified by the addition of aluminum blades to facilitate the mixing and the flow of clay particles through the spray stream. The required amount of each toxicant (and deactivator, if desired) is placed in a stainless steel sprayer adapted so that a nozzle, screen and tip can be used. The container is pressurized to 1.75 kg/cm$^2$. The pill coater is started and the toxicant spray stream directed down and into the flowing granules. The sprayer is shaken at intervals to insure a homogeneous spray solution. After the contents have been sprayed, the container is rinsed with a small amount of methylene chloride and spray rinsed onto the granules, and the granules dried by evaporating the methylene chloride.

## Method B

The desired quantity of granules is charged into a hexagonal polyethylene bowl attached to a variable speed laboratory mixer. The speed of the mixer is adjusted so that the granules cascade down the side of the bowl. The toxicant(s) and deactivator are placed in a 40 mL capacity DeVilbis bottle. A DeVilbis nozzle is attached to the bottle, the air pressure is adjusted to 0.14 to 0.21 kg/cm$^2$ and the contents sprayed onto the cascading granules. After the contents have been sprayed, the container is rinsed with a small amount of methylene chloride and spray rinsed onto the granules, and the granules dried by evaporating the methylene chloride.

Utilizing the above procedures and varying the amounts and ratios of flucythrinate and phorate or flucythrinate and terbufos yields the granular compositions listed in Table II below.

## TABLE II

Granular compositions % toxicant by weight

| Composition Number | % Flucythrinate | % Phorate |
|---|---|---|
| 1 | 0.1 | 10 |
| 2 | 0.33 | 10 |
| 3 | 0.50 | 10 |
| 4 | 0.67 | 10 |
| 5 | 1.0 | 10 |
| 6 | 0.1 | 15 |
| 7 | 0.38 | 15 |
| 8 | 0.56 | 15 |
| 9 | 0.67 | 15 |
| 10 | 0.75 | 15 |
| 11 | 1.0 | 15 |

| | % Flycythrinate | % Terbufos |
|---|---|---|
| 12 | 0.1 | 10 |
| 13 | 0.33 | 10 |
| 14 | 0.50 | 10 |
| 15 | 0.67 | 10 |
| 16 | 1.0 | 10 |
| 17 | 0.1 | 15 |
| 18 | 0.38 | 15 |
| 19 | 0.56 | 15 |
| 20 | 0.67 | 15 |
| 21 | 0.75 | 15 |
| 22 | 1.0 | 15 |

## EXAMPLE 2
### Effectiveness of various ratios against southern armyworms

The toxicity of various ratios of flucythrinate/phorate and flucythrinate/terbufos compositions to third instar southern armyworms (<u>Spodoptera</u> <u>eridania</u>) is determined by topical application of microdrops of the mixtures in acetone solution to the dorsum of the insect. The results of these experiments which are summarized in Table III below demonstrate the improvement in insecticidal activity expressed as $LD_{50}$ values, obtained with composition of the invention when compared to each of the components individually.

## TABLE III

Toxicity of compositions against third instar southern armyworms

| Ratio | Component | Topical $LD_{50}$, ng/worm | Topical $LD_{50}$ Expressed As Flucythrinate Equivalents, ng/worm |
|---|---|---|---|
| - | a. Phorate | 651.0 | |
| - | b. Flucythrinate | 18.5 | |
| 10:1 | a:b | 95 + 9.5 | 9.8 |
| | a | 927.0 | |
| | b | 12.5 | |
| 20:1 | a:b | 95 + 4.7 | 4.8 |
| | a | 718.0 | |
| | b | 11.3 | |
| 30:1 | a:b | 202 + 6.7 | 7.1 |
| | a | 695.0 | |
| | b | 9.4 | |
| 40:1 | a:b | 189 + 4.7 | 4.9 |
| | c. Terbufos | 251.0 | |
| | b | 6.9 | |
| 10:1 | c:b | 37 + 3.7 | 3.8 |
| | c | 183.0 | |
| | b | 9.1 | |
| 20:1 | c:b | 55 + 2.8 | 2.9 |
| | c | 232.0 | |
| | b | 15.7 | |
| 30:1 | c:b | 129 + 4.3 | 4.6 |
| | c | 150.0 | |
| | b | 8.8 | |
| 40:1 | c:b | 136 + 3.4 | 3.6 |

EXAMPLE 3

Effectiveness of compositions of the invention against black cutworms (Agrotis ipsilon)

Granular treatments are applied with planter mounted applicators and seven inch banders behind the planter shoes and in front of a press wheel. Treatments are applied at planting to a plot consisting of a single row of corn ten feet long, surrounded by an aluminum lawn edging as a barrier. When the seedlings have reached the two-leaf stage, black cutworms which have been grown in a rearing room to the fourth instar, the stage at which they begin cutting plants, are released in each plot over a two week period as shown in Table IV below to simulate a natural infestation of the pest in its destructive stages. Three weeks after the onset of infestation the plots are evaluated and the damage attributed to the black cutworms recorded. The results of these experiments utilizing some of the compositions identified in Example 1 are summarized in Table V below and demonstrate the effectiveness of compositions of the invention in providing protection to seedling corn from black cutworms.

TABLE IV.

Artificial infestation of black cutworm larvae into plots

| Day of release | Number of larvae released per plot | Instar of larvae |
|---|---|---|
| 1 | 5 | 4 - 5 |
| 3 | 6 | 4 - 5 |
| 4 | 5 | 4 - 5 |
| 10 | 3 | 4 - 5 |
| 11 | 4 | 4 - 5 |

## Table V

### Effectiveness of compositions of the invention
### in providing protection of seedling corn

| Composition number | OZ 1000' | lbs ac/A (broadcast) | lbs ac/A (treated zone) | % control compared untreated control |
|---|---|---|---|---|
| Control | 0 | 0 | 0 | 0 |
| 2 | 9 | 1.0/0.033 | 4.3/0.04 | 12 |
| 4 | 9 | 1.0/0.067 | 4.3/0.14 | 50 |
| 7 | 8 | 1.3/0.033 | 5.6/0.14 | 100 |
| 8 | 8 | 1.3/0.049 | 5.6/0.21 | 47 |
| 10 | 8 | 1.3/0.065 | 5.6/0.28 | 60 |
| 13 | 9 | 1.0/0.010 | 4.3/0.04 | 38 |
| 15 | 9 | 1.0/0.003 | 4.3/0.14 | 41 |
| 19 | 8 | 1.3/0.044 | 5.6/0.19 | 28 |
| 22 | 9 | 1.0/0.067 | 4.3/0.29 | 62 |

## EXAMPLE IV

Effectiveness of various ratios against southern armyworms

The toxicity of various ratios of fenvalerate/phorate, fenvalerate/terbufos, cypermethrin/phorate and cypermethrin/terbufos compositions to third instar southern armyworms (Spodoptera eridania) is determined by topical application microdrops of the mixtures in active solution to the dorsum of the larval thoracic segment. After treatment of each tray of dishes a Siava lime bean leaf was placed on each dish as a food source. The results of these experiments which are summarized in Table VI below demonstrate the insecticidal activity, expressed as $LD_{50}$ values, obtained with composition of the invention when compared to each of the components individually.

## TABLE VI

Toxicity of compositions against third instar southern armyworms

| Ratio | Component | Topical $LD_{50}$ micrograms solution/ Grams Larval Wt | Topical $LD_{50}$ Expressed As Flucythrinate micrograms solution/ Grams Larval Wt |
|---|---|---|---|
| | a. Phorate | 126.78 | |
| | d. Cypermethrin | 1.76 | |
| 10:1 | a:d | | 3.37 |
| 20:1 | a:d | | 3.44 |
| 30:1 | a:d | | 1.78 |
| 40:1 | a:d | | 2.46 |
| | c. Terbufos | 33.26 | |
| | d. Cypermethrin | 3.94 | |
| 10:1 | c:d | | 1.80 |
| 20:1 | c:d | | 1.22 |
| 30:1 | c:d | | 0.73 |
| 40:1 | c:d | | 0.78 |
| | a. Phorate | 120.66 | |
| | e. Fenvalerate | 0.99 | |
| 10:1 | a:e | | 1.62 |
| 20:1 | a:e | | 1.19 |
| 30:1 | a:e | | 1.13 |
| 40:1 | a:e | | 0.89 |
| | c. Terbufos | 68.84 | |
| | e. Fenvalerate | 1.85 | |
| 10:1 | c:e | | 1.35 |
| 20:1 | c:e | | 1.03 |
| 30:1 | c:e | | 1.87 |
| 40:1 | c:e | | 0.58 |

WHAT IS CLAIMED IS:

1.  An insecticidal composition comprising a mixture of 1.0% to 25.0% by weight of 0,0-diethyl S-[(ethylthio)methyl]phosphodithioate and a minimum of from 0.025% to 2.5% by weight of pyrethroid or 1.0% to 25.0% by weight of S-[[(1,1-dimethylethyl)thio]methyl] 0,0-diethylphosphorodithioate and a minimum of from 0.1% to 2.5% by weight of pyrethroid.

2.  An insecticidal composition comprising a mixture of 1.0% to 25.0% by weight of 0,0-diethyl S-[(ethylthio)methyl]phosphodithioate and a minimum of from 0.025% to 2.5% of $(\pm)$-$\alpha$-cyano-$\underline{m}$-phenoxybenzyl (+)-2-[$\underline{p}$-(difluoromethoxy)phenyl]-3-methylbutyrate or 1.0% to 25.0% by weight of S-[[(1,1-dimethylethyl)thio]-methyl] 0,0-diethylphosphorodithioate and a minimum of from 0.1% to 2.5% of $(\pm)$-$\alpha$-cyano-$\underline{m}$-phenoxybenzyl (+)-2-[$\underline{p}$-difluoromethoxy)phenyl]-3-methylbutyrate.

3.  An insecticidal composition according to Claim 2 wherein the $(\pm)$-$\alpha$-cyano-$\underline{m}$-phenoxybenzyl (+)-2-[$\underline{p}$-(difluoromethoxy)phenyl]-3-methylbutyrate is 2.5% to 10% by weight.

4.  An insecticidal composition according to Claim 2 which further comprises about 75% to 95% by weight of a sorptive or non-sorptive particulate granular particle.

5. An insecticidal composition comprising a mixture of 1.0% to 25.0% by weight of S-[[1,1-dimethylethyl)thio]methyl] 0,0-diethylphosphorodithioate and a minimum of from 0.1% to 2.5% of cyano-(3-phenoxyphenol)-methyl-4-chloro-alpha-(1-methylethyl) benzeneacetate.

6. An insecticidal composition according to Claim 5 wherein the cyano-(3-phenoxyphenol)methyl-4-chloro-alpha-(1-methylethyl) benzeneacetate is 2.5% to 10% by weight.

7. An insecticidal composition according to Claim 6 which further comprises about 75% to 95% by weight of a sorptive or non-sorptive particulate granular particle.

8. A method for controlling insect pests and/or providing protection from black cutworms (Lepidotera:Noctuidae) comprising applying a composition comprising 1.0% to 25.0% by weight of 0,0-diethyl S-[(ethylthio)methyl]phosphodithioate and a minimum of from 0.025% to 2.5% by weight of (±)-α-cyano-m-phenoxybenzyl (+)-2-[p-(difluoromethoxy)phenyl]-3-methylbutyrate or 1.0% to 25.0% by weight of S-[[(1,1-dimethylethyl)thio]methyl] 0,0-diethylphosphorodithioate and a minimum of from 0.1% to 2.5% by weight of (±)-α-cyano-m-phenoxybenzyl (+)-2-[p-(difluoromethoxy) phenyl]-3-methylbutyrate or 1.0% to 25.0% by weight of S-[[1,1-dimethylethyl)thio]methyl] 0,0-diethylphosphorodithioate and a minimum of from 0.1% to 2.5% of cyano-(3-phenoxyphenol)methyl-4-chloro-alpha-(1-methylethyl)benzeneacetate and about 75% to 99% by weight of a sorptive or non-sorptive particulate granular particle.

9. A method according to Claim 8 wherein the (±)-α-cyano- m-phenoxybenzyl (+)-2-[p-(difluoromethoxy)-phenyl]-3-methylbutyrate or the cyano-(3-phenoxyphenol)-methyl-4-chloro-alpha-(1-methylethyl)benzeneacetate represents 2.5% to 10% by weight of the insecticidal components.

10. A method for controlling insect pests and/or providing protection from black cutworms (Lepidotera: Noctuidae) comprising applying a composition comprising a mixture of 1.0% to 25.0% by weight of 0,0-diethyl S-[(ethylthio)methyl]phosphodithioate and a minimum of from 0.025% to 2.5% by weight of pyrethroid or 1.0% to 25.0% by weight of S-[[(1,1-dimethylethyl)-thio]methyl] 0,0-diethylphosphorodithioate and a minimum of from 0.1% to 2.5% by weight of pyrethroid.

0194566

Application number

EP 86 10 2871

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | CHEMICAL ABSTRACTS, vol. 97, no. 21, 22nd November 1982, page 307, no. 176948g, Columbus, Ohio, US; S.L. GOLDSON et al.: "Control of the beet yellows disease vector Myzus persicae and the resultant effects on yield in Canterbury beet crops", & PROC. N.Z. WEED PEST CONTROL CONF. 1982, 35th, 324-7 * Abstract * | 1,8,10 | A 01 N 57/12 // (A 01 N 57/12 A 01 N 53:00 A 01 N 37:38 ) |
| A | Idem | 2-7,9 | |
| A | DE-A-2 850 795 (SIPCAM) * Claims 1,4,6-14; page 17, line 14 - page 18, line 18 * | 1-10 | |
| A | RESEARCH DISCLOSURE, vol. 207, July 1981, pages 298-299, no. 20736, Havant Hampshire, GB; ANON: "Pesticide mixtures for control of insect pests" * Whole article * | 1-10 | TECHNICAL FIELDS SEARCHED (Int. Cl.4)  A 01 N |
| A | GB-A-1 583 847 (ICI AUSTRALIA) * Page 2, line 13 - page 14, line 35; claims * | 1-10 | |
| | --- -/- | | |

The present search report has been drawn up for all claims

| Place of search | Date of completion of the search | Examiner |
|---|---|---|
| THE HAGUE | 16-06-1986 | FLETCHER A.S. |

## European Patent Office

## EUROPEAN SEARCH REPORT

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl.4) |
| A | GB-A-2 052 264 (BAYER AG) * Page 1, line 58 - page 2, line 25; page 2, lines 35-41; page 3, lines 9-16; claims * | 1-10 | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 16-06-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO Form 1503 03 82